# EUROPEAN PATENT SPECIFICATION

(11) **EP 0 484 868 B1**
(45) Date of publication and mention of the grant of the patent: **07.06.1995**
(21) Application number: 91118818.3
(22) Date of filing: 05.11.1991
(51) Int. Cl.: B29C 47/32, B29C 47/04, B29C 47/56

(54) **Rubber sheet forming apparatus**
Vorrichtung zum Formen eines Gummibandes
Dispositif pour former une feuille en caoutchouc

(30) Priority: 09.11.1990 JP 305676/90
(43) Date of publication of application: 13.05.1992
(73) Proprietor: NAKATA ZOKI CO., LTD., Kobe-shi, Hyogo-ken (JP)
(72) Inventor: Hiraiwa, Takemi, Kobe-shi, Hyogo-ken (JP); Kokui, Kazuhisa, Miki-shi, Hyogo-ken (JP); Inoue, Kunihei, Takasago-shi, Hyogo-ken (JP)
(74) Representative: Türk, Gille, Hrabal, Leifert

(56) References cited:
- CH-A- 437 758
- DE-C- 3 521 643
- US-A- 1 356 891
- US-A- 1 603 813
- US-A- 2 382 177
- US-A- 3 443 277
- US-A- 4 137 027

## Description

The present invention relates to a rubber sheet forming apparatus capable of adhering rubber sheets formed by overlaying two rubber materials firmly on the joint surfaces.

Complex rubber sheets of two rubber layers differing in rubber composition, for example, a hard rubber sheet material and a soft rubber sheet material are widely used.

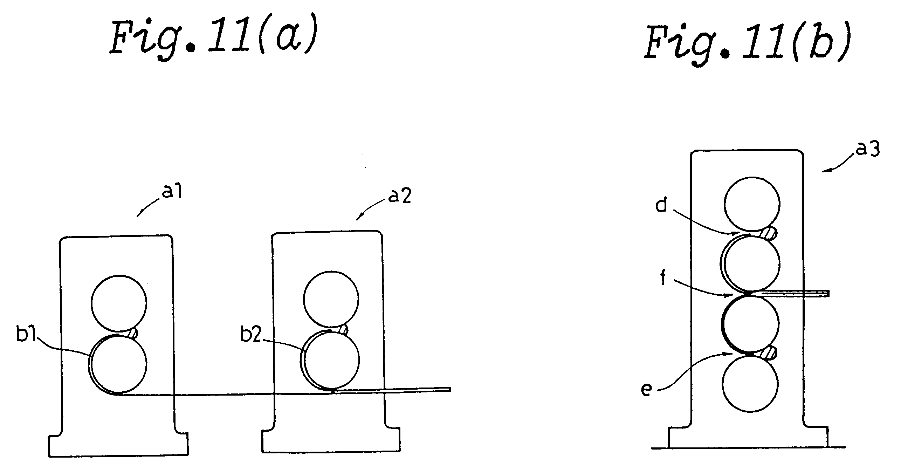

Such complex rubber sheets were hitherto manufactured, as shown in Fig. 11 (a), by individually rolling rubber sheets (b1, b2) by using two single roll machines (a1, a2), and gluing the two rubber sheets to form a complex sheet (c).

Or, as shown in Fig. 11 (b), using a roll Cardan machine (a3) comprising four rolls, a complex sheet (c) was formed by rolling in upper and lower stages (d, e), and compressing in middle stage (f).

In the above constitution, however, since the rolled rubber materials are exposed to air until compressed, the adhesion strength is lowered due to deposit of dust particles contained in the air or drying of the adhesion surface, and the adhesion surface was often separated.

To solve a part of the above problems, it was proposed in the Japanese patent publication No. 61-14932 to dispose the nozzles of two extruders closely to each other near the roller periphery, and overlay the two sheets extruded from the nozzles on the roller.

In this proposal, although the problems of dust deposit and drying of the adhesion surfaces may be solved, the pressing force between sheets is weak, the adhesion is also weak, and the problems are not solved completely.

US-PS-2,382,177 discloses a rubber sheet forming apparatus comprising a rubber extruder having an upper rubber extruder main body, a lower rubber extruder main body and a nozzle port, further comprising a roll forming device disposed ahead of the rubber extruder for rolling a rubber extruded from the nozzle port, wherein said roll forming device has an upper roll and a lower roll disposed ahead of the nozzle port and pressing the overlaid rubber extruded from the nozzle port.

However, this apparatus, too, is not capable of solving all the problems as to pressing force, adhesion between the layers and required precision of the composite.

Accordingly, it is an object of the present invention to provide a rubber sheet forming apparatus capable of joining rubber sheets made of complex rubber powerfully on the adhesion surface, and enhancing the finishing precision.

According to one aspect of the present invention, a rubber sheet forming apparatus of the aforementioned kind is characterized in that the lower rubber extruder main body (5) is arranged at an acute angle with respect to the upper rubber extruder main body (4); that a main body block (6) is mounting the front ends of the upper and lower rubber extruder main bodies (4,5); that said main body block (6) comprises a base part (12) having an upper rubber passage (16) and a lower rubber passage (17) communicating with rubber exits (15A,15B) of the upper and lower rubber extruder main bodies (4,5); that a protrusion part (14) is projected at the front surface (13) of the base part (12) so as to reduce the thickness toward the forward side and having upper and lower slopes (19A,19B) on which rubber coming out from the upper and lower rubber passages (16,17) flow respectively, wherein on the upper and lower slopes (19A,19B) of the protrusion are formed an upper and a lower grooves (33A,33B) communicating with the upper ruber passage (16) and lower rubber passage (17); that said upper head (9) and lower head (10) are respectively disposed on the main body block (6) so as to close the upper and lower slopes (19A,19B), form an upper rubber path (21) between the upper slope (19A) and the upper head (9), form a lower rubber path (22) between the lower slope (19B) and the lower head (10), and form the nozzle port (7) communicating with a joining part (23) joining the upper and lower rubber paths (21,22); and that the upper and lower heads (9,10) are rotatably pinned to the base part (12), so that they can be pivoted to the base part (12) using a hydraulic cylinder (36), and have an upper and lower joint surfaces (34A,34B) confronting the upper and lower slopes (19A,19B) and having grooves (35) confronting the upper and lower grooves (33A,33B) so that by pivoting the heads (9,10) to the base part (12), an upper and a lower rubber paths (21,22) are formed between the grooves in the heads (35) and the grooves in the protrusion (33A,33B).

The main body block (6) may have a detachable tongue piece (20) for varying the sectional shape of the upper or lower rubber path (21, 22) at the front end of the protrusion part (14).

As mentioned above, the nozzle port is opened to the overlap part of the upper rubber path communicating with the upper rubber extruder main body and the lower rubber path communicating with the lower rubber extruder main body. Therefore, the rubber materials sent out from the upper and lower rubber extruder main bodies are overlaid without being exposed to air, and therefore dust does not deposit on the overlaying surfaces and the adhesion surfaces are not dried before adhesion, so that the both rubber materials are adhered securely. Besides, since the both rubber materials are joined before being discharged from the nozzle port, it is easy to increase the overlapping surface area by forming the joining surfaces in zigzag or undulated form, so that the adhesion strength may be further enhanced. Still more, since the joining precision of the both rubber materials is enhanced, the finishing precision of the rubber sheet composed of complex rubber in a completed form may be also enhanced.

In addition, since the roll forming device is disposed ahead of the nozzle port, the both rubber materials are compressed and the adhesion strength is further improved.

Thus, the rubber sheet forming apparatus of the invention has an organically united and assembled constitution, and is hence capable of forming rubber sheet made of complex rubber excellent in adhesion, at high precision.

Meanwhile, when a tongue piece is detachably fitted to the front end of the protrusion part of the main body block, by properly selecting the shape of the tongue piece, the sectional shape of the upper or lower rubber path may be changed, and hence the adhesion surface may be freely varied, so that increases of adhesion strength and diversification of disposing position of two rubber layers may be realized.

An embodiment of the present invention will now be described by way of example, referring the attached drawings, in which;
Fig. 1 is a front view showing an embodiment of the invention.
Fig. 2 is a plan view thereof.
Fig. 3 is a front side view thereof.
Fig. 4 is a partial sectional front view showing essential parts together with action.
Fig. 5 is a plan view thereof.
Fig. 6 is a sectional view magnifying the overlap part.
Fig. 7 is a perspective view showing a tongue piece.
Fig. 8 is a perspective view showing a rubber sheet formed by using the apparatus of the invention.
Fig. 9 is a perspective view showing other example of tongue piece.
Fig. 10 is a perspective view showing other example of rubber sheet.
Fig. 11(a), (b) are front views schematically showing the prior art.

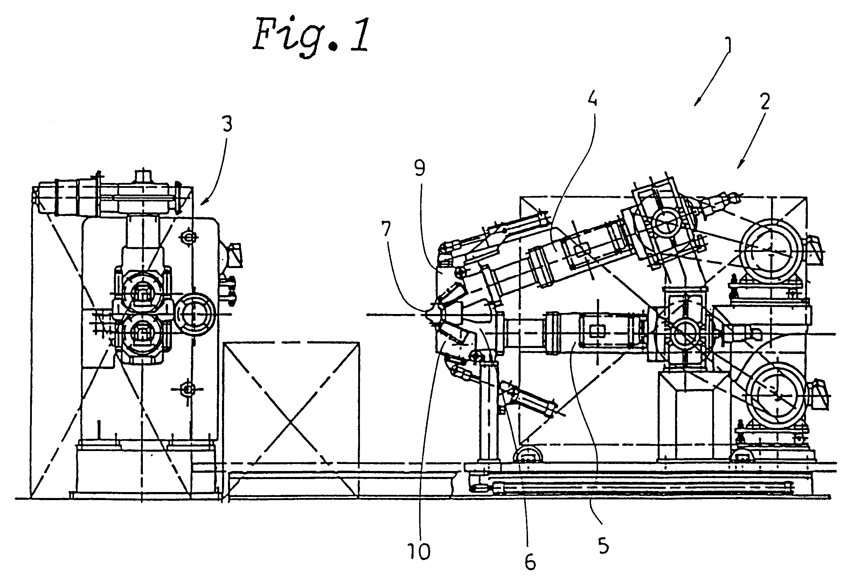

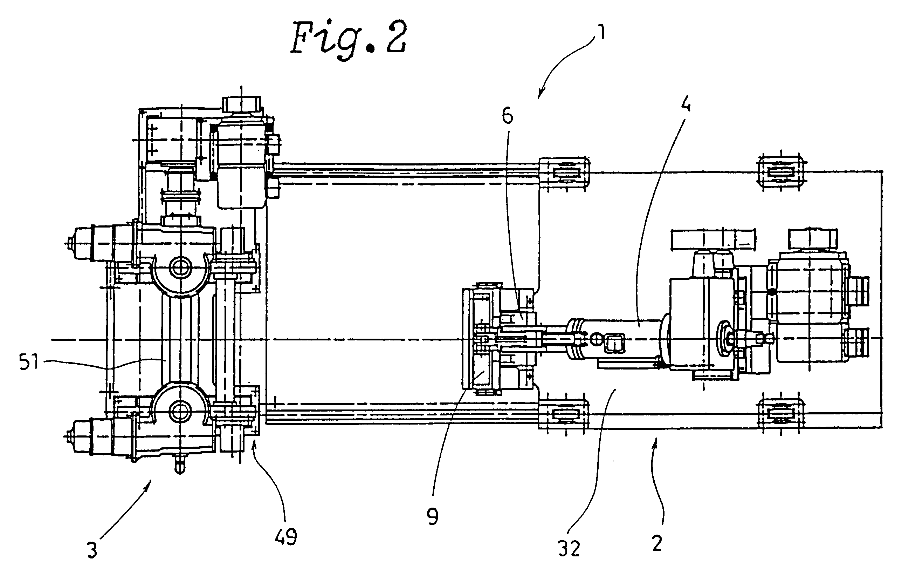

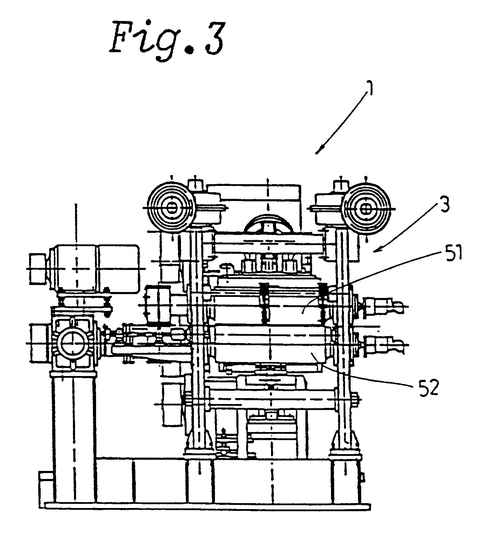

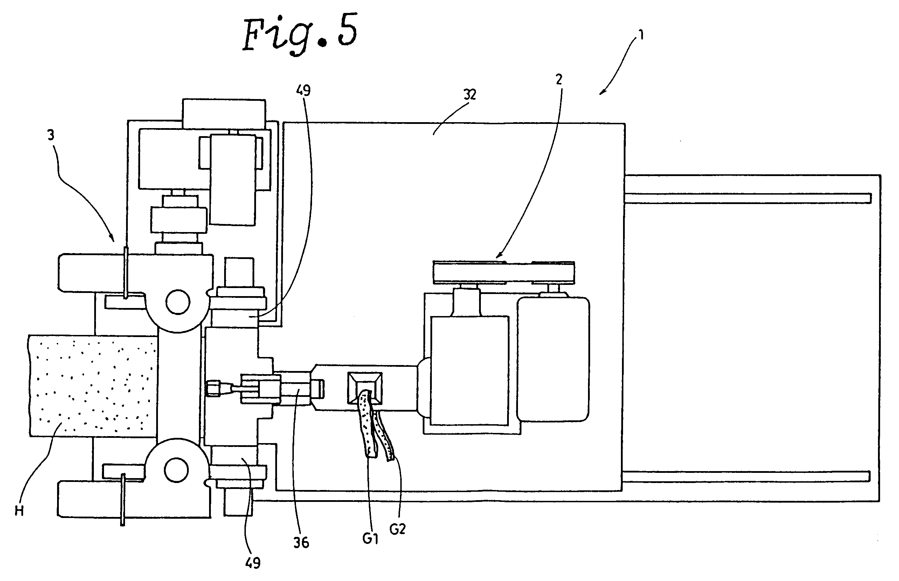

In Fig. 1 to Fig. 8, the rubber sheet forming apparatus 1 has a roll forming device 3 disposed ahead of a rubber extruder 2. The rubber extruder 2 comprises an upper rubber extruder main body 4, a lower rubber extruder main body 5 crossing at an acute angle with the upper rubber extruder main body 5, a main body block 6 fixing the front ends of the upper and lower extruder main body 4, 5 at the rear side, and an upper head 9 and lower head 10 disposed on the main body block 6 and forming a nozzle port 7.

The upper rubber extruder main body 4 is formed, in this embodiment, by inserting a feed screw 31 into the hole part of a tubular outer cylinder. By rotation of the feed screw 31, the rubber material G1 charged into the hole part is kneaded and sent out forward.

The lower rubber extruder main body 5 is composed same as the upper rubber extruder main body 4.

The main body block 6 has a base part 12 fixed through a post on a carriage 32 which moves in and out to the roll forming device 3 and having two rear surfaces 11A, 11B capable of fixing the front ends of the upper rubber extruder main body 4 and lower rubber extruder main body 5, and a protrusion part 14 projected to the front surface 13 of the base part 12.

In the base part 12, are formed an upper rubber passage 16 and a lower rubber passage 17 communicating respectively with rubber exits 15A, 15B of the upper and lower extruder main bodies 4, 5.

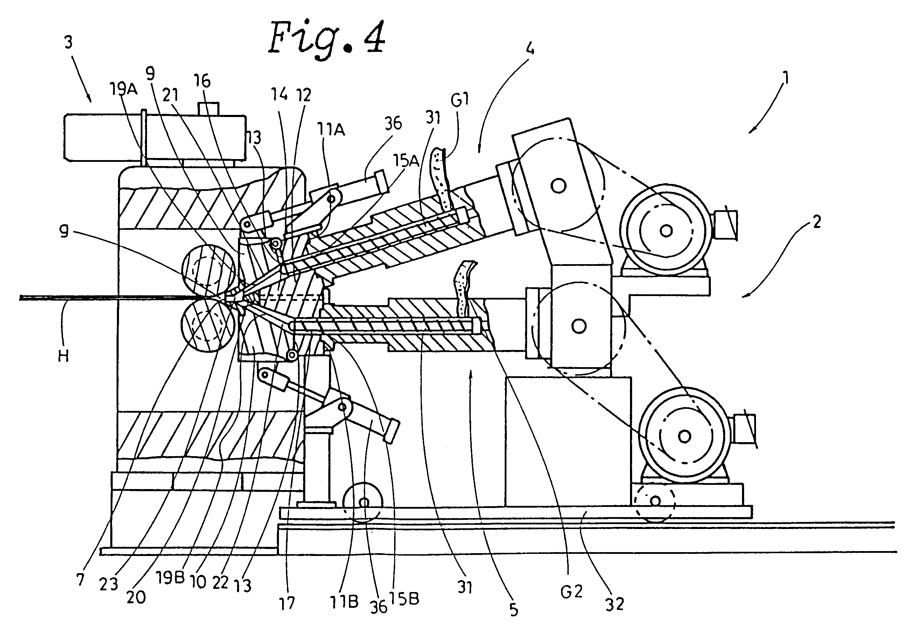

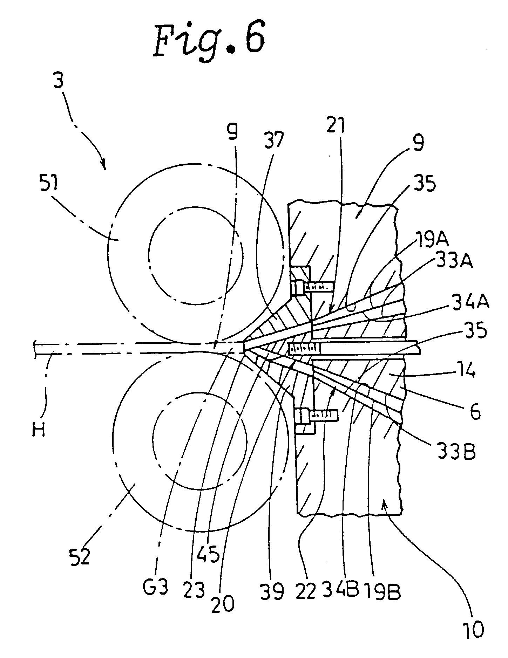

The protrusion part 14 has an upper slope 19A inclining downward toward the front side on the upper side as shown in Figs. 4, 6, and a lower slope 19B inclining upward toward the front side on the lower side, so that the thickness decreases toward the front side. In this embodiment, a tongue piece 20 is detachably fitted to the front end of the protrusion part 14.

On the upper slope 19A and lower slope 19B, are formed an upper groove 33A and a lower groove 33B communicating with the upper rubber passage 16 and lower rubber passage 17.

The upper head 9 is a block body having a rear surface contacting with the upper part of the front surface 13 of the base part 12 and an upper joint surface 34A contacting with the upper slope 19A of the protrusion 14, and a groove 35 confronting the upper groove 33A is disposed on the upper joint surface 34A.

The upper part of the upper head 9 is rotatably pinned to the base part 12. One end of an expansion tool 36 such as a hydraulic cylinder pivoted to the base part 12 is pivoted to the upper part of the upper head 9, and by expansion and contraction of the expansion tool 36, the upper head 9 may be brought closer to or remoter from the main body block 6.

By the approach of the main body block 6, the rear surface of the upper head 9 contacts with the front surface 13 of the base part 12, and the upper joint surface 34A contacts with the upper slope 19A of the protrusion part 14, and by the upper groove 33A and the groove 35, an upper rubber path 21 leading to the upper rubber passage 16 is formed.

The lower head 10 is formed symmetrically with the upper head 9 in vertical direction, and by the extension of the expansion tool 36, its rear surface contacts with the front surface 13 of the base part 12, and the lower joint surface 34B contacts with the lower slope 19B, and the lower rubber path 22 is formed by the lower groove 33B and the groove 35.

The upper and lower rubber paths 21, 22 meet at the front end of the rubber extruder 2, and an overlap part 23 is formed. At the front end of the overlap part 23, a nozzle port 7 formed by the upper and lower heads 9, 10 is disposed.

In this embodiment, the front end part enclosing the nozzle port 7 of the upper is formed by a pair of nozzle pieces 37, 39 detachably fitted to the upper and lower heads 9, 10.

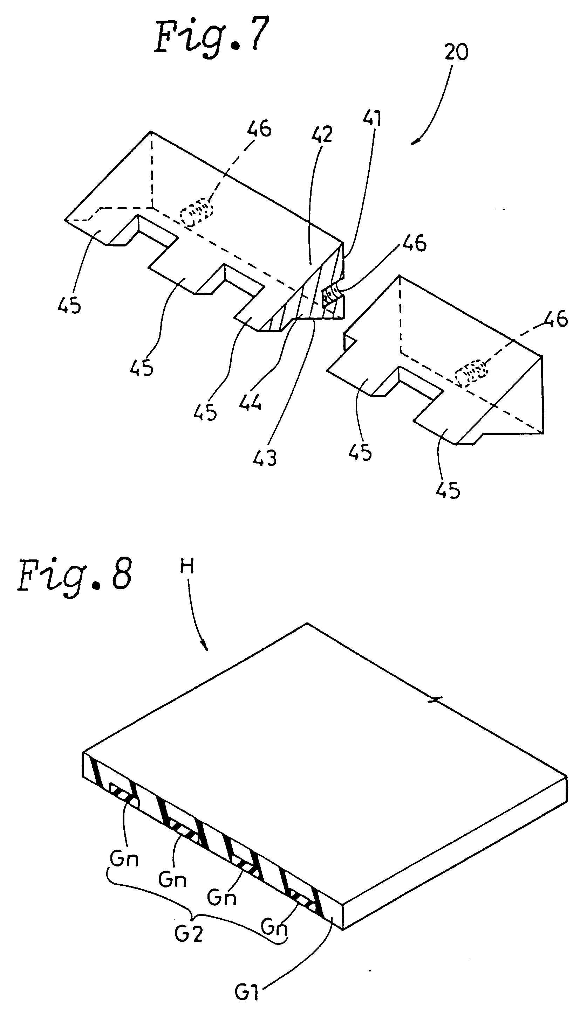

The tongue piece 20 is composed as shown in Fig. 7 in this embodiment, that is, plural pieces 45 are projecting forward to the front end of a base part 44 of nearly triangular section having an upper slope 42 and a lower slope 43 inclining at nearly a same angle as the upper and lower slopes 19A, 19B from the upper and lower end of the rear surface 41 contacting with the front end surface of the protrusion part 14.

The tongue piece 20 is detachably fitted to the projection part 14 by driving a bolt horizontally into a bolt hole 46 drilled in the rear surface 41 from behind the main body block 6.

The tongue piece 20 is installed as stated above, and the pieces 45 bulge out into the lower rubber path 22. By installing upside down, the pieces 45 may be projected into the upper rubber path 21.

The upper head 9, main body block 6, and lower head 10 are fixed by a pair of clamp tools 49, 49 capable of holding these three members' sideways.

The roll forming device 3 is a single roll calender machine, in this embodiment, disposing an upper roll 51 and a lower roll 52 in upper and lower positions, and the gap (g) between the upper and lower rolls 51, 52 forming the rolling entrance is disposed close to the nozzle port 7.

When the rubber extruder 2 is mounted on the carrier 32 as this embodiment, prior to rubber sheet forming job, the rubber extruder 2 is moved forward to bring the nozzle port 7 closer to the gap (g), so that the rubber discharged from the nozzle port 7 may be immediately rolled and formed.

In this way, rubber materials G1, G2 are supplied to the upper rubber extruder main body 4 and lower rubber extruder main body 5.

The rubber material G1 charged into the upper rubber extruder main body 4 is kneaded by the feed screw 31, and reaches the overlap part 23 through the upper rubber passage 16 and upper rubber path 21.

The rubber material G2 charged into the lower rubber extruder main body 5 is similarly kneaded, and divided into plural lines Gn by the pieces 45 of the tongue piece 20 through the lower rubber passage 17 and lower rubber path 22, thereby reaching the overlap part 23.

At the overlap part 23, the two rubber materials G1, G2 are overlapped to compose a complex rubber G3, which is discharged from the nozzle port 7 toward the gap (g) of the roll forming device 3.

The complex rubber G3 is rolled and joined by the upper and lower rolls 51, 52 of the roll forming device 3, and a continuous rubber sheet H composed of two rubber layers is formed as shown in Fig. 8.

Since the two rubber materials G1, G2 are thus joined at the overlap part 23, the joint surfaces are not exposed to air, and the overlapped two rubber materials G1, G2 are compressed by the roll forming device 3, so that a firm bond is achieved.

When the tongue piece 20 having the pieces 45 is used as this embodiment, the extrusion sectional shape of one or both rubber materials may be set freely, so that the junction surface may be further reinforced.

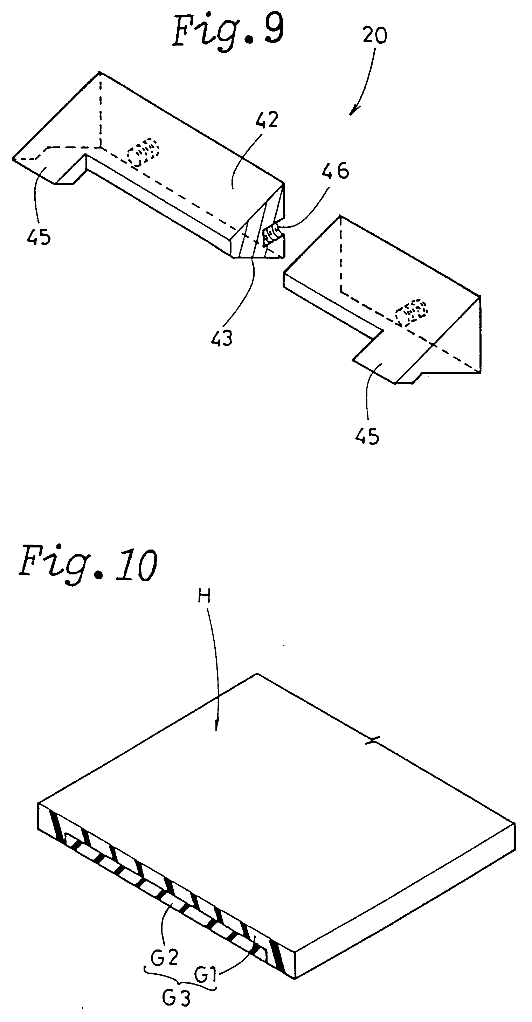

Fig. 9 shows other embodiment of the tongue piece 20. In this case, the pieces 45, 45 are disposed only at both sides in the widthwise direction, and the formed rubber sheet H is set as shown in Fig. 10, while the upper surface and both side surfaces of one rubber material G2 are covered with the other rubber material G1.

By exchanging the upper and lower heads 9, 10 with, for example, those having different depth and shape of the grooves 35, 35, rubber sheets made of varied complex rubber differing in the thickness and shape of the rubber sheet may be formed.

The roll forming device 3 may be deformed in various forms in the invention, including a calender machine using four rolls, as well as the single roll calender machine.

As previously described, in the rubber sheet forming apparatus according to the present invention, the upper rubber path communicating with the upper rubber extruder main body and the lower rubber path communicating with the lower rubber extruder main body meet at the overlap part, so that two rubber materials may be joined without being exposed to fresh air.

Besides, since the roll forming device is located ahead of the nozzle port, two rubber materials may be compressed, and a rubber sheet composed of a complex rubber with a strong adhesion strength and high junction precision may be formed, so that it may be preferably applied in manufacture of belt for belt conveyer, waterproof sheet, liner of tire and others.

## Claims

1. A rubber sheet forming apparatus comprising a rubber extruder having an upper rubber extruder main body, a lower rubber extruder main body and a nozzle port, further comprising a roll forming device disposed ahead of the rubber extruder for rolling a rubber extruded from the nozzle port, wherein said roll forming device has an upper roll and a lower roll disposed ahead of the nozzle port and pressing the overlaid rubber extruded from the nozzle port
characterized in
that the lower rubber extruder main body (5) is arranged at an acute angle with respect to the upper rubber extruder main body (4);
that a main body block (6) is mounting the front ends of the upper and lower rubber extruder main bodies (4,5) at the rear side thereof;
that an upper and a lower heads (9,10) are each coupled to the main body block (6) for forming the nozzle port (7);
that said main body block (6) comprises a base part (12) having an upper rubber passage (16) and a lower rubber passage (17) communicating with rubber exits (15A,15B) of the upper and lower rubber extruder main bodies (4,5);
that a protrusion part (14) is projected at the front surface (13) of the base part (12) so as to reduce the thickness toward the forward side and having upper and lower slopes (19A,19B) on which rubber coming out from the upper and lower rubber passages (16,17) flow respectively, wherein on the upper and lower slopes (19A,19B) of the protrusion are formed an upper and a lower grooves (33A,33B) communicating with the upper rubber passage (16) and lower rubber passage (17);
that said upper head (9) and lower head (10) are respectively disposed on the main body block (6) so as to close the upper and lower slopes (19A,19B), form an upper rubber path (21) between the upper slope (19A) and the upper head (9), form a lower rubber path (22) between the lower slope (19B) and the lower head (10), and form the nozzle port (7) communicating with a joining part (23) joining the upper and lower rubber paths (21,22); and
that the upper and lower heads (9,10) are rotatably pinned to the base part (12), so that they can be pivoted to the base part (12) using a hydraulic cylinder (36), and have an upper and lower joint surfaces (34A,34B) confronting the upper and lower slopes (19A,19B) and having grooves (35) confronting the upper and lower grooves (33A,33B) so that by pivoting the heads (9,10) to the base part (12), an upper and a lower rubber paths (21,22) are formed between the grooves in the heads (35) and the grooves in the protrusion (33A,33B).

2. A rubber sheet forming apparatus according to claim 1, wherein the main body block (6) has a detachable tongue piece (20) for varying the sectional shape of the upper or lower path (21,22) at the front of the protrusion part (14).

## Patentansprüche

1. Vorrichtung zum Formen eines Gummibandes, mit einem Gummiextruder, der einen oberen Gummiextruderhauptkörper, einen unteren Gummiextruderhauptkörper und eine Düsenöffnung aufweist, weiter mit einer vor dem Gummiextruder angeordneten Profilwalzeinrichtung zum Walzen des aus der Düsenöffnung extrudierten Gummis, wobei die Profilwalzeinrichtung eine vor der Düsenöffnung angeordnete obere Walze und eine untere Walze aufweist und das übereinandergelegte, aus der Düsenöffnung extrudierte Gummi zusammenpreßt,
**dadurch gekennzeichnet, daß**
der untere Gummiextruderhauptkörper (5) in einem spitzen Winkel in Bezug auf den unteren Gummiextruderhauptkörper (4) angeordnet ist;
daß ein Hauptkörperblock (6) die vorderen Enden der oberen und unteren Gummiextruderhauptkörper (4,5) an ihren Rückseiten hält;
daß ein oberer und ein unterer Kopf (9, 10) jeweils an dem Hauptkörperblock (6) zum Bilden der Düsenöffnung (7) befestigt ist;
daß der Hauptkörperblock (6) ein Grundteil (12) umfaßt, welches eine obere Gummipassage (16) und eine untere Gummipassage (17) aufweist, die mit den Gummiauslaßöffnungen (15A, 15B) der oberen und unteren Gummiextruderhauptkörper (4, 5) in Verbindung stehen;
daß ein Vorsprung (14) an der vorderen Oberfläche (13) des Grundteils (12) hervorragt, um die Dicke in Richtung der vorderen Seite zu vermindern und der obere und untere Schrägen (19A, 19B) aufweist, auf welchen das aus den oberen und unteren Gummipassagen (16, 17) austretende Gummi fließt, wobei auf den oberen und unteren Schrägen (19A, 19B) des Vorsprungs obere und untere Nuten (33A, 33B) ausgebildet sind, die mit der oberen Gummipassage (16) und der unteren Gummipassage (17) in Verbindung stehen;
daß der obere Kopf (9) und der untere Kopf (10) auf dem Hauptkörperblock (6) so angeordnet sind, daß sie die oberen und unteren Schrägen (19A, 19B) schließen, einen oberen Gummipfad (21) zwischen der oberen Schräge (19A) und dem oberen Kopf (9) bilden, einen unteren Gummipfad (22) zwischen der unteren Schräge (19B) und dem unteren Kopf (10) bilden, und die Düsenöffnung (7) bilden, die mit einem Verbindungsteil (23) in Verbindung steht, welches die oberen und unteren Gummipfade (21, 22) verbindet; und
daß die oberen und unteren Köpfe (9, 10) drehbar auf dem Grundteil (12) befestigt sind, so daß sie auf das Grundteil (12) unter Verwendung eines hydraulischen Zylinders (36) geneigt werden können, und daß sie obere und untere Verbindungsflächen (34A, 34B) aufweisen, die den oberen und unteren Schrägen (19A, 19B) gegenüberliegen und Nuten (35) aufweisen, die den oberen und unteren Nuten (33A, 33B) gegenüberliegen, so daß durch das Verschwenken der Köpfe (9, 10) auf das Grundteil (12) ein oberer und unterer Gummipfad (21, 22) zwischen den Nuten in dem Kopf (35) und den Nuten in dem Vorsprung (33A, 33B) gebildet wird.

2. Vorrichtung zum Formen eines Gummibandes nach Anspruch 1, bei dem der Hauptkörperblock (6) ein zerlegbares Zungenteil (20) zum Verändern der Querschnittsfläche des oberen oder unteren Pfades (21, 22) an der Vorderseite des Vorsprungs (14) aufweist.

## Revendications

1. Appareil de mise en forme d'une feuille de caoutchouc comportant une extrudeuse de caoutchouc ayant un corps principal d'extrudeuse supérieur de caoutchouc et un corps principal d'extrudeuse inférieur de caoutchouc et un orifice formant buse, comportant en outre un dispositif de mise en forme par rouleaux agencé en avant de l'extrudeuse de caoutchouc pour laminer un caoutchouc extrudé à partir de l'orifice formant buse, dans lequel ledit dispositif de mise en forme par rouleaux a un rouleau supérieur et un rouleau inférieur agencés en avant de l'orifice formant buse et comprimant les caoutchoucs extrudés, superposés, provenant de l'orifice formant buse,
caractérisé
en ce que le corps principal d'extrudeuse inférieur (5) de caoutchouc est disposé selon un angle aigu par rapport au corps principal d'extrudeuse supérieur (4) de caoutchouc;
en ce qu'un bloc formant corps principal (6) supporte les extrémités avant des corps principaux d'extrudeuses supérieur et inférieur (4, 5) de caoutchouc au niveau de son côté arrière;
en ce que les têtes supérieure et inférieure (9, 10) sont chacune reliées au bloc formant corps principal (6) pour former l'orifice formant buse (7);
en ce que ledit bloc formant corps principal (6) comporte une partie formant base (12) ayant un passage supérieur (16) pour caoutchouc et un passage inférieur (17) pour caoutchouc communiquant avec des sorties (15A, 15B) de caoutchouc des corps principaux d'extrudeuses supérieur et inférieur (4, 5) de caoutchouc;
en ce qu'une partie faisant saillie (14) fait saillie au niveau de la surface avant (13) de la partie formant base (12) de manière à réduire l'épaisseur en direction du côté avant et ayant des parties inclinées supérieure et inférieure (19A, 19B), sur laquelle s'écoule respectivement le caoutchouc sortant des passages supérieur et inférieur (16, 17) pour caoutchouc, dans laquelle sont formées, sur les parties inclinées supérieure et inférieure (19A, 19B) de la saillie, une gorge supérieure et une gorge inférieure (33A, 33B) communiquant avec le passage supérieur (16) pour caoutchouc et le passage inférieur (17) pour caoutchouc;
en ce que ladite tête supérieure (9) et ladite tête inférieure (10) sont respectivement agencées sur le bloc formant corps principal (6) de manière à fermer les parties inclinées supérieure et inférieure (19A, 19B), à former un trajet supérieur (21) de caoutchouc entre la partie inclinée supérieure (19A) et la tête supérieure (9), à former un trajet inférieur (22) de caoutchouc entre la partie inclinée inférieure (19B) et la tête inférieure (10), et à former l'orifice formant buse (7) communiquant avec une partie de liaison (23) reliant les trajets supérieur et inférieur (21, 22) de caoutchouc; et
en ce que les têtes supérieure et inférieure (9, 10) sont fixées par goupille de manière à pouvoir être mises en rotation sur la partie formant base (12), de sorte qu'elles peuvent pivoter sur la partie formant base (12) en utilisant un vérin hydraulique (36), et ont des surfaces de liaison supérieure et inférieure (34A, 34B) situées en vis à vis des parties inclinées supérieure et inférieure (19A, 19B) et ayant des gorges (35) en vis à vis des gorges supérieure et inférieure (33A, 33B) de sorte que par pivotement des têtes (9, 10) par rapport à la partie formant base (12), des trajets supérieur et inférieur de caoutchouc (21, 22) sont formés entre les gorges existant dans les têtes (35) et les gorges existant dans la saillie (33A, 33B).

2. Appareil de mise en forme d'une feuille de caoutchouc selon la revendication 1, dans lequel le bloc formant corps principal (6) a un élément formant languette détachable (20) destiné à faire varier la forme en coupe des trajets supérieur ou inférieur (21, 22) de caoutchouc au niveau de l'avant de la partie faisant saillie (14).
